# EUROPÄISCHE PATENTANMELDUNG

(11) **EP 0 984 380 A2**
(43) Veröffentlichungstag der Anmeldung: **08.03.2000**
(21) Anmeldenummer: 99116232.2
(22) Anmeldetag: 17.08.1999
(51) Int. Cl.: G06K 7/00, G06K 19/07, B60R 25/00, B62H 5/00, B62H 5/20

(54) **Verfahren, Vorrichtung und System zur fertigungsbegleitenden Dokumentation, und/oder Kennzeichnung sowie zur späteren Identifikation von beweglichen,transportablen Gegenständen oder Gütern**

(30) Priorität: 31.08.1998 DE 19839622
(71) Anmelder: Sprick Fahrräder GmbH, 59302 Oelde-Stromberg (DE)
(72) Erfinder: Sprick, Julius, 33330 Gütersloh (DE)
(74) Vertreter: Kruspig, Volkmar, Dipl.-Ing.

(57) **Zusammenfassung**

Die Erfindung betrifft ein Verfahren, eine Vorrichtung und ein System zur fertigungsbegleitenden Dokumentation und/oder Kennzeichnung sowie zur späteren Identifikation von beweglichen, transportablen Gegenständen oder Gütern, insbesondere Fahrzeuge mit einem gekapselten elektronischen Speicherbaustein, der Bestandteil eines Transponders ist (2). Erfindungsgemäß wird der Transponder (2) nur durch Zerstören lösbar am Gegenstand oder Gut befestigt, so daß eine eindeutige Identifikation des Gegenstandes durch Benutzung eines einfachen Schreib-Lesegerätes (11) möglich ist. Der Transponder (2) ist vorzugsweise in einem allseitig verschließbaren Kunststoffgehäuse (3) angeordnet und wird in eine Bohrung (5) oder Öffnung im zu kennzeichnenden Gut, z. B. einem Fahrradrahmen (1) mittels Einspreizverbindung durch plastische Verformung von mindestens Teilen des Gehäuses nicht lösbar befestigt.

## Beschreibung

Die Erfindung betrifft ein Verfahren, eine Vorrichtung und ein System zur fertigungsbegleitenden Dokumentation und/oder Kennzeichnung sowie zur späteren Identifikation von beweglichen, transportablen Gegenständen oder Gütern mit einem gekapselten elektronischen Speicherbaustein.

Seit längerer Zeit sind sogenannte Barcode-Systeme bekannt, welche aus Lesegeräten und sogenannten Barcode-Druckern bestehen. Mit Hilfe von Barcode-Etiketten oder dergleichen, können bestimmte Informationen über Fertigungsort, -tag und -zeit oder eine Produkt- oder Besitzkennzeichnung auf Waren oder dergleichen angebracht werden. Barcode-Systeme werden auch zur Vereinfachung von Lagerhaltungs- sowie zur Fertigungsrationalisierung eingesetzt.
Probleme bestehen dann, wenn ein bestimmtes Halbfertigprodukt entsprechend der jeweiligen Fertigungsstufe neu klassifiziert werden muß oder werden soll. Hierbei ist das Überkleben oder Entfernen und Neuanbringen eines neuen Barcode-Etiketts notwendig. Darüber hinaus sind die optischen Lesegeräte für Barcode-Systeme aufwendig und relativ störanfällig. Auch können Barcode-Etiketten zur Besitzidentifikation von Dritten in unerwünschter Weise entfernt werden.

Auch sind sogenannte magnetische Identifikatoren, z. B. in Form von codierten Magnetstreifen oder Chipkarten-Systemen bekannt, die mit entsprechenden Lese-Schreibgeräten zusammenwirken. Insbesondere magnetische Systeme sind zur Langzeitspeicherung von Daten, die quasi die Historie eines bestimmten Produktes umfassen können, aufgrund Ihrer Störanfälligkeit ungeeignet. Chipkarten-Lesesysteme sowie Chipkarten selbst sind relativ teuer, wobei handelsübliche Chipkarten nicht für den Umgang unter belasteter Umgebung, z. B. im Produktionsprozeß oder für den Einsatz in Fahrzeugen, geeignet sind.

Aus der DE 30 24 068 A1 ist eine Vorrichtung zur Speicherung und Weitergabe von Informationen bekannt, welche aus einem Codierer, einem tragbaren Speicher und wenigstens einem Decodierer besteht. Mit der bekannten Vorrichtung sollen Informationen speicher- und weiterleitbar sein, durch welche sichergestellt oder bestätigt wird, daß bestimmte Tätigkeiten oder Maßnahmen durchgeführt wurden. Hierfür ist beispielsweise in einer Fertigungseinrichtung vorgesehen, mehrere Codierer an wichtigen Punkten längs des Weges von Wachpersonal zu installieren, wobei jeder Codierer eine spezielle Einteilung vorhandener Dauermagnete enthält, die seine bestimmte Lage identifizieren. Das Wachpersonal benützt einen Speichermodul und bringt das Gehäuse des Speichermoduls beim Kontrollgang nacheinander mit den jeweiligen vor Ort installierten Codierern in Kontakt. Über spezielle Reed-Schalter erfolgt dann ein Auslesen der im Codierer durch Anordnung der Magnete vorhandenen Information. Diese Information wird dann im Speichermodul mittels eines elektronischen Speicherbausteins abgelegt. Durch Auslesen der Daten im elektronischen Speicher kann dann der Weg des Wachpersonals nachträglich verfolgt oder überprüft werden.

Die bekannte Vorrichtung eignet sich jedoch nicht zur Identifizierung von Gegenständen, um z. B. dem Diebstahlschutz wirksam vorzubeugen. Darüber hinaus ist die in der DE 30 24 068 A1 beschriebene Vorrichtung großbauend und für die Verwendung zur Kennzeichnung von Waren oder sonstigen Produkten ungeeignet und verfügt nur über eine beschränkte Speicherkapazität. Weiterhin kann dem Codierer selbst auf elektronischem Wege keine neue Information aufgeprägt bzw. zugeführt werden, da eine mechanische Umordnung der dort verwendeten Dauermagnete erforderlich wäre.

Zusammenfassend ist den bekannten Systemen gemeinsam, daß die an den Waren oder sonstigen Produkten angebrachten Informationen statisch sind, so daß bei jedem Verarbeitungsschritt oder sonstiger Aktivität die Identität mittels zusätzlicher Techniken geprüft werden muß bzw. den abgespeicherten Daten zuzuordnen ist.

Auch sind die bekannten Identifikationsmethoden nicht ausreichend manipulationssicher, so daß eine anzustrebende Diebstahisprävention nicht oder nur eingeschränkt erreicht wird.

Aus der US 5,469,363 ist ein elektronischer Tag zur Dokumentation und Kontrolle von Gegenständen bekannt, wobei die Datenübertragung zwischen einem Programmier-Lesegerät und einem Speicherbaustein induktiv, d. h. kontaktlos erfolgt.

Zur Kennzeichnung von Fahrzeugen, insbesondere Fahrrädern, wird eine Fabrik- oder Seriennummer an geeigneter Stelle eingeprägt, so daß diese nicht oder nur materialabtragend bzw. zerstörend entfernt werden kann. Ein Einprägen einer derartigen Fabrik- und Seriennummer am Rahmen eines Fahrrades führt jedoch bei bestimmten hochfesten Materialien zu unerwünschten Gefügeveränderungen und daraus resultierenden Festigkeitsproblemen.

Auch beispielsweise der Rückgriff auf Lasergravur oder ähnliche Verfahren konnte sich bisher nicht erfolgreich durchsetzen, da zum einen die darstell- bzw. aufbringbare Informationsmenge gering ist und andererseits auch hier Manipulationsmöglichkeiten nicht ausgeschlossen werden können. Darüber hinaus ist das bekannte Auf- oder Anbringen von Fabrik- oder Seriennummern nicht geeignet, fertigungsbegleitende Dokumentationen zu erstellen, um hierdurch sowohl während der Herstellung als auch beim Versand und Ausliefern Rationalisierungeffekte erreichen zu können.

Es ist daher Aufgabe der Erfindung, ein Verfahren, eine Vorrichtung und ein System zur fertigungsbegleitenden Dokumentation und/oder Kennzeichnung sowie zur späteren Identifiktation von beweglichen, transportablen Gegenständen oder Gütern, insbesondere Fahrrädern, mit einem gekapselten elektronischen Speicherbaustein anzugeben, wobei sowohl eine größere Informationsmenge abspeicherbar ist, als auch zu einem späteren Zeitpunkt durch befugte Dritte ein Auslesen der Information möglich wird, um aufgefundene Gegenstände oder Güter hinsichtlich ihres Herstellungsortes oder der Besitzverhältnisse zuordnen zu können.

Die Lösung der Aufgabe der Erfindung erfolgt verfahrensseitig mit einer Lehre gemäß Definition nach Patentanspruch 1, bezüglich der Vorrichtung mit einem Gegenstand nach dem Merkmal des Patentanspruches 5 und hinsichtlich des Systems wie es im Anspruch 14 beschrieben ist.
Die Unteransprüche umfassen mindestens zweckmäßige Ausgestaltungen und Weiterbildungen des Erfindungsgegenstandes.

Der verfahrensseitige Grundgedanke der Erfindung besteht nun darin, in einem frühen Fertigungsstadium einen Transponder, welcher den elektronischen Speicherbaustein enthält, am Gegenstand oder am Halbfertigprodukt so zu befestigen, daß ein Entfernen nur zerstörend und damit auffällig möglich ist.

Der Transponder weist eine individuelle elektronisch auslesbare Kennzeichnung auf.
Über eine kontaktlose Übertragung werden fertigungs- oder typrelevante Identifikationsdaten zum Speicher übertragen und dort abgelegt. Während des Fertigungsprozesses aber auch im Anschluß beispielsweise bei der Vorbereitung des Versands der betreffenden Gegenstände oder Güter kann nun ein elektronisches Identifizieren vorgenommen werden. Nach Ausliefern der Gegenstände oder Güter wird zum Lieferzeitpunkt mittels eines kontaktlosen Schreib-/Lesegerätes ein Zuordnen von kundenspezifischen Daten zu den bereits vorhandenen Identifikationsdaten vorgenommen und ein entsprechendes Abspeichern im Speicherbaustein des Transponders veranlaßt. Hierdurch kann im Falle des Verlustes oder bei Diebstahl bei einem späteren Wiederauffinden die gewünschte Identifiktation vorgenommen werden, oder es können gezielt Kontrollen veranlaßt werden. In einer Ausgestaltung des Verfahrens besteht die Möglichkeit vor der Auslieferung der Güter, die lediglich für den Fertigungsprozeß bzw. für die Produktion relevanten Daten im elektronischen Speicher des Transponders zu löschen, so daß die Datenmenge für die später einzugebenden kundenspezifischen Daten nicht unnötig eingeschränkt wird.

Die kundenspezifischen- und Identifiktationsdaten werden durch beispielsweise tabellarische Zuordnung in einer zentralen Datenbank, insbesondere für versicherungstechnische Zwecke, abgelegt.

Das erfindungsgemäße Verfahren findet vorzugsweise bei der Kennzeichnung und Identifizierung für Fahrräder oder dergleichen Fahrzeuge Anwendung.

Vorrichtungsseitig ist der Speicherbaustein zur Datenübernahme Bestandteil eines an sich bekannten Transponders, welcher über eine integrierte Antenne induktiv mit Energie versorgt wird und nach entsprechender Aktivierung in der Lage ist, drahtlos Daten mit einem Schreib-/Lesegerät auszustauschen.

Der Transponder selbst ist in einem allseitig verschließbaren oder verschlossenen Kunststoffgehäuse angeordnet, wobei das den Transponder aufnehmende Gehäuse kraft-, form- und oder stoffschlüssig mit dem jeweiligen Gegenstand oder Gut verbunden wird.

Bevorzugterweise besitzt das Gehäuse eine im wesentlichen Zylinderform, wobei nach dem Einbringen des Transponders die Zylinderöffnung durch Verguß verschließbar ist.

Zum Erhalt eines festen Sitzes des Transpondergehäuses, beispielsweise durch Einpressen in eine im oder am Gut vorgesehende Bohrung oder Öffnung besitzt der Zylindermantel mindestens über einen Längsabschnitt einen konischen Verlauf und es sind an der Außenseite des Gehäuses radial Arretierungsvor- oder rücksprünge angeordnet.

Die Zylinderdeckfläche des Gehäuses weist die Form einer randseitig abschließenden oder leicht überstehenden Kappe auf. Nach dem Verbinden des Gehäuses oder dem Anordnen des Gehäuses am zu kennzeichnenden bzw. zu sichernden Gut wird eine zusätzliche Versiegelung oder Abdeckung in Form einer nur zerstörend entfernbaren Klebefolie angebracht.
Erfindungsgemäß besteht die Möglichkeit, das Kunststoffgehäuse oder die Klebefolie zur Typen-, Produktionsort-, Zeit oder dergleichen Kennzeichnung verschiedenfarbig zu gestalten.

Das den Transponder aufnehmende Gehäuse wird bevorzugt mittels Einspreizverbindung unter Erhalt einer nicht lösbaren plastischen Verformung des Kunststoffes, d. h. von Mindestteilen des Gehäuses, in einer Bohrung oder Öffnung eines Rahmenteiles eines Fahrzeuges, insbesondere eines Fahrrades, angeordnet. Durch die miniaturisierte Ausführung des Transponders einschließlich Gehäuse kann die Bohrung im Rahmen des Fahrzeuges gering dimensioniert sein oder es kann hier auf eine ohnehin fertigungsbedingte Öffnung zurückgegriffen werden, so daß eine Materialschwächung nicht gegeben ist.

Das erfindungsgemäße System zur Dokumentation und Kennzeichung sowie zur späteren Identifikation von beweglichen Gegenständen, insbesondere Fahrzeugen, geht davon aus, daß ein Transponder, welcher einen Speicherbaustein aufweist, in einem Kunststoffgehäuse vorzugsweise vergossen befindlich ist, wobei der Transponder zum kontaktlosen Schreiben und Lesen von Daten geeignet ist.

Das Kunststoffgehäuse wird nicht oder nur zerstörend lösbar an oder in dem Gegenstand, insbesondere einem Fahrradrahmen, befestigt, wobei im Speicher des Transponders Daten über Herstellungs- und/oder Besitzverhältnisse abgelegt werden.

Mittels eines Schreib-/Lesegerätes sind Speicherdaten autorisiert les- und/oder schreibbar, wobei beim Auffinden bzw. Wiederauffinden des Gegenstandes, insbesondere Fahrrades, die Herkunft und/oder die Besitzverhältnisse identifizier- und feststellbar sind.

Ein weiterer erfindungsgemäßer Grundgedanke besteht darin, neben einem sichtbar am Gegenstand befestigten Gehäuse mit Transponder oder einem Transponderdummy mindestens einen weiteren Transponder an einer schwer erkennbaren, versteckten Stelle anzuordnen. Sollte in diesem Falle unbefugt der erkennbare Transponderdummy entfernt werden, besteht nach autorisierter Rückfrage einer Datenbank die Möglichkeit, den Ort zu lokalisieren, an dem ein weiterer Transponder fixiert ist und diesen dann mittels des Schreib-/Lesegerätes hinsichtlich seines Dateninhaltes auszulesen.

Die erwähnte Datenbank kann neben den Transponderanordnungsdaten Transponderidentifikatoren sowie Besitzdaten umfassen, so daß jederzeit nachprüfbar ist, ob daß aufgefundene Gut im Eigentum des momentanen Nutzers steht oder nicht.

Mittels der Erfindung kann also ein Auslesen und Updaten von Informationen unter Rückgriff auf den Speicherbaustein sowie die Eigenschaften des Transponders erfolgen, wobei das Gehäuse mit Transponder und Speicher am jeweiligen Gegenstand oder Gut unlösbar befestigt ist. Demnach bleibt der Transponder während des gesamten Herstellungs- und Lebenszyklus mit dem jeweiligen Gegenstand fest verbunden.

Der einzusetzende Transponder, welcher ein passives elektronisches Bauteil darstellt, das ohne Primärenergiequelle arbeitet, ist wartungs- und verschleißfrei sowie kostengünstig herstellbar. Über ein Aktivieren des Transponders mittels eines Schreib- und Lesegerätes kann ein empfangenes elektromagetisches Signal moduliert und zurückgesendet werden, wodurch die im Transponder bzw. im dort befindlichen Speicherbaustein zuvor abgelegten Informationen wieder ausgelesen werden können. Diese Informationen umfassen eine individuelle Transponderkennzeichnung und weitere Daten zum elektronischen Identifizieren des Gegenstandes, an dem der Transponder unlösbar befestigt ist.

Erfindungsgemäß besteht die Möglichkeit, daß die abgespeicherten Daten von einem Handlesegerät mit alphanumerischen Display übernommen und in Klarschrift dargestellt werden können, so daß bei Kontrollen sofort eine Überprüfung der Besitzverhältnisse möglich ist, ohne daß über Dritte möglicherweise Vergleichslisten oder dergleichen Datenbestände eingesehen werden müssen.

Bevorzugt wird der Transponder mit einem Gehäuse im Rahmenrohr eines Fahrrades angeordnet, da es sich hierbei um ein in der Regel nicht auswechselbares Teil handelt. Die Abmessungen, insbesondere die Länge, des vorzugsweise aus Kunststoff bestehenden Transpondergehäuses sind auf das Rahmenrohr und das Rahmenmaterial abgestimmt.

Es liegt im Sinne der Erfindung, daß das Schreib- und/oder Lesegerät in einer hand-held Ausführung vorliegt, so daß der Lesekopf des Geräts leicht in die Nähe des Transponders gebracht werden kann, um die Datenübertragung zu vollziehen. Bevorzugt besitzt das Lesegerät wie erwähnt ein alphanumerisches Display, z. B. ein LCD-Display, wobei die aus dem Transponder oder über den Transponder abgerufenen modulierten Daten in ein Lesegerät des Speichers übernehmbar sind, um eine Auswertung zu einem späteren Zeitpunkt vorzunehmen oder die Daten über eine entsprechende Schnittstelle zu einer Datenbank und/oder einem Personalcomputer zu übertragen. Selbstverständlich kann unmittelbar oder mittelbar ein Ausdruck der Daten auf einem Beleg vorgenommen werden.

Die Erfindung soll nachstehend anhand eines Ausführungsbeispieles sowie unter Zuhilfenahme von Zeichnungen näher erläutert werden.

Hierbei zeigen:
Fig. 1 eine beispielhafte Anordnung des Gehäuses mit Transponder in einem Fahrradrahmen;
Fig. 2 eine Teilschnittdarstellung des Kunststofftranspondergehäuses und
Fig. 3 eine Prinzipdarstellung der Verwaltung der mittels Transponder und zugehörigen Daten gekennzeichneten Güter, insbesondere Fahrräder.

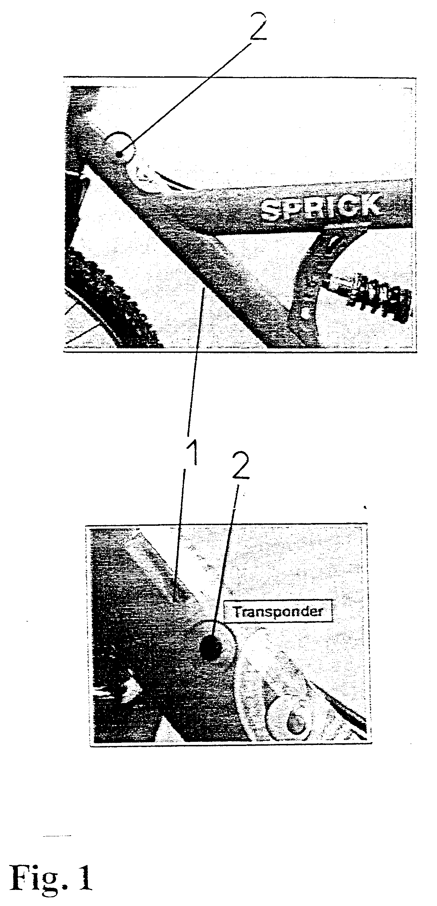

Wie aus der Fig. 1 ersichtlich, wird zur Kennzeichnung und späteren Identifizierung eines Fahrrades ein in einem Gehäuse befindlicher Transponder in eine Bohrung am Rahmen 1 des Fahrrades eingepresst.

Der in einem Gehäuse befindliche Transponder 2 ist in der Lage kontaktlos bzw. drahtlos ein empfangenes elektromagnetisches Signal informationsmoduliert zurückzusenden, so daß eine im Transponder bzw. in einem dort vorgesehenen Speicherbaustein abgelegte Kennzeichnung oder Information ausgelesen werden kann. Bei dieser Information kann es sich z. B. um die Seriennummer des Transponders selbst handeln, wodurch jeder Transponder ein Unikat ist. Anhand dieser Transponder-Seriennummer kann dann jedes Fahrrad, welches mit einem solchen Transponder ausgestattet ist, identifiziert werden. Darüber hinaus können mit Hilfe eines Schreib- und Lesegerätes bei der Auslieferung des Fahrrades die Eigentümerdaten im Transponder bzw. dem dort vorgesehenen Speicherbaustein abgelegt werden, damit wiederum unter Rückgriff auf das Lesegerät ein gestohlenes Fahrrad wiederaufgefunden an Ort und Stelle dem Eigentümer zugewiesen werden kann.

Wie dargelegt können mit dem Schreib-/Lesegerät die im Transponder gespeicherten Daten ausgelesen, aber auch verändert und ergänzt werden. Das Lesegerät selbst weist in bevorzugter Weise ein alphanumerisches Display auf, hierdurch kann ausgelesene Information im Klartext angezeigt werden. Selbstverständlich können die aus dem jeweiligen Transponder abgerufenen Daten auch in einen Lesegerätespeicher übernommen werden, um eine spätere Auswertung vorzunehmen. Ebenso ist eine Übertragung mittels geeigneter Schnittstelle zu einem Personalcomputer oder mittels eines Modems vorgesehen.

Der in der Fig. 1 gezeigte Ort des Anbringens des Transponders entspricht einer fest definierten Stelle. Zusätzlich kann der sichtbare Teil des Transpondergehäuses mit einer speziellen nur zerstörend entfernbaren Klebefolie abgedeckt werden, um Manipulationen, z. B. einen Transponderaustausch durch unbefugte Dritte, erkennen zu können.

Bei einem weiteren Ausführungsbeispiel wird neben der Anordnung eines Transponders an der üblichen Stelle ein weiterer Transponder an einer schwer zugänglichen oder nicht vermuteten versteckten Stelle angebracht. Durch Vergleich der jeweiligen Transponderdaten kann dann im Falle des Wiederauffindens des Fahrrades nach vorherigem Entwenden geprüft werden, ob Manipulationen am sichtbaren Transponder erfolgten. Beim sichtbaren Transponder kann es sich um einen Dummy-Transponder handeln. Der Ort der Anbringung des weiteren Transponders wird nur Befugten bekannt gegeben und ist in einer entsprechend vor Fremden zugriffsgeschützten zentralen Datenbank ablegbar.

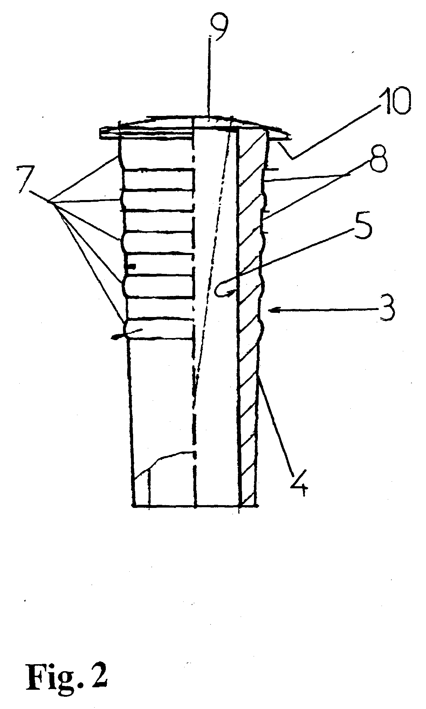

Das in der Fig. 2 gezeigte Kunststoff-Transpondergehäuse 3 dient dem Erhalt einer nicht lösbaren Einspreizverbindung durch plastische Verformung von Gehäuseteilen.

Das Gehäuse 3 besitzt eine im wesentlichen Zylinderform mit einem konisch sich von oben nach unten verjüngernden Zylindermantel 4. Die Zylinderbohrung 5 dient der Aufnahme des eigentlichen Transponders. Die Öffnung des Zylinders 6 wird nach Einbringen des Transponders, z. B. durch ein Gießharz sicher verschlossen.

Zum Erhalt des gewünschten Sitzes des Gehäuses 3 in einer entsprechenden Bohrung, z. B. in einem Fahrradrahmen wie in Fig. 1 dargestellt, weist die Außenoberfläche des Zylindermantels mindestens in einem Kopfbereich Arretierungsvorsprünge 7 und/oder Rücksprünge 8 auf.

Die Zylinderdeckfläche ist beim gezeigten Beispiel als randseitig überstehende Kappe 9 ausgebildet. Durch den Rand 10 wird ein unerwünschtes zu tiefes Einpressen oder Hineindrücken des Gehäuses 3 in die Bohrung des Rahmens nach Fig. 1 vermieden.

Das Kunststoffgehäuse kann z. B. je nach Herstellungsjahr oder dem Typ des zu kennzeichnenden bzw. zu identifizierenden Fahrrades mit einer unterschiedlichen Farbe ausgeführt werden.

Das Transpondergehäuse besitzt einen Durchmesser im Bereich weniger Milimeter, so daß die Befestigungsbohrung ebenfalls nur einen geringen Durchmesser aufweist, so daß keine Materialschwächung in nennenswerter Form gegeben ist.

Das Gehäuse 3 mit Transponder 2 kann im übrigen in Bohrungen fixiert werden, welche aus fertigungstechnologischen Gründen ohnehin notwendig sind, so daß keine weiteren technologischen Schritte erforderlich werden.

Die Kappe 9 des Gehäuses 3 besitzt eine äußerst flache Form, so daß ein im wesentlichen bündiger Abschluß zum Rahmen erreicht wird und das Aufbringen der erwähnten zusätzlichen Klebefolie keinen Behinderungen unterliegt.

Das Kunststoffgehäuse mit der beispielsweise erläuterten Form von Vor- bzw. Rücksprüngen 7 und 8 gewährleistet die erforderlich plastische Verformung, um eine nicht oder nur zerstörend lösbare Verbindung zwischen Transponder und Gut, insbesondere dem Fahrradrahmen, zu erreichen.

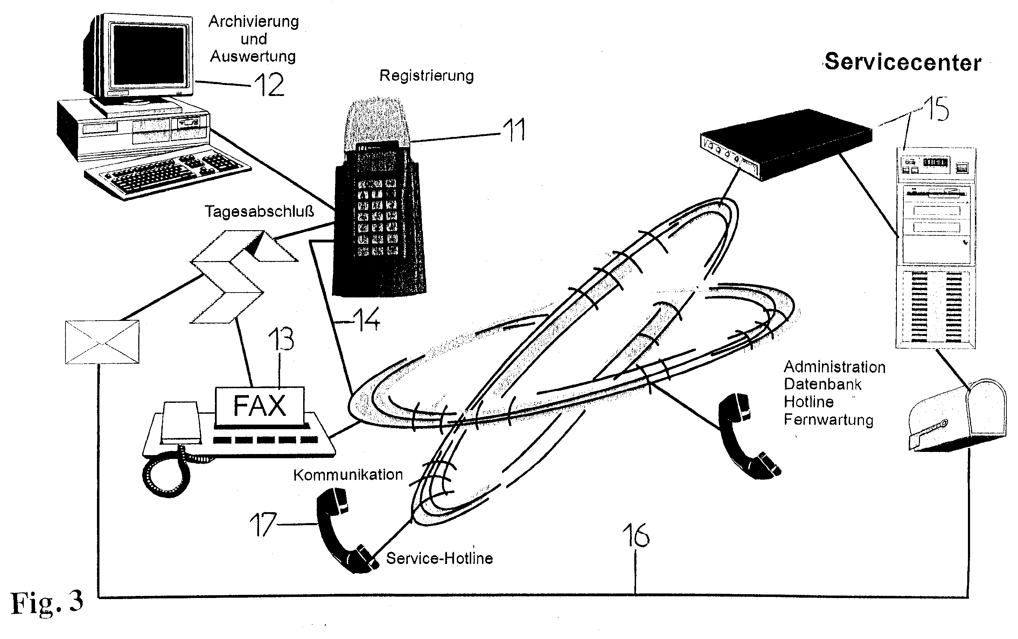

Mit Hilfe der Fig. 3 soll die Datenverwaltung der mit der vorgestellten Vorrichtung versehenenen Fahrräder oder sonstiger Güter näher erläutert werden.

Mit Hilfe eines Schreib- und Lesegerätes 11, welches beim ausliefernden Händler zur Verfügung steht, wird eine Registrierung der mit dem Transponder versehenen Fahrräder unter zusätzlicher Eingabe mindestens des Eigentümernamens vorgenommen. Ein Personalcomputer 12 dient der Archivierung aber auch der Auswertung von Daten beim Händler und ermöglicht neben einer Bestandskontrolle auch eine Überprüfung ausgelieferter Räder und eine spätere Besitzkontrolle aber auch Aktualisierung bei legitimen Besitzwechsel.

Die Ergebnisse eines Tagesabschlusses, z. B. Angabe der Typen verkaufter Fahrräder sowie der jeweiligen Käufer, werden entweder über ein öffentliches Datennetz mittels Faxgerät 13 oder direkt online 14 zu einem Identifikationsservicecenter 15 übertragen. Im Servicecenter 15 ist eine elektronische Datenbank zur Verwaltung der von einer Vielzahl von Händlern, aber auch von den Herstellern eingehenden Informationen vorhanden. Alternativ besteht die Möglichkeit, über einen Postversandweg 16 Tagesabschlußberichte in gedruckter Form zum Servicecenter 15 zu senden, welche dort manuell oder durch Einscannen in den Datenbestand übernommen werden.

Die dem Servicecenter 15 übergebenen Informationen können beispielsweise auch solche betreffend den Einbauort eines versteckten weiteren Transponders umfassen, wobei die Informationen nur autorisierten Personen bei einer entsprechenden Identifizierung beispielsweise durch PIN (Personal Identification Number) übermittelt wird.

Befugte Personen oder Dienststellen, z. B. Polizeibehörden, sind berechtigt, über eine Hotline 17 bei Auffinden von Fahrrädern Informationen aus dem Servicecenter 15 abzurufen, um Besitzer zu ermitteln oder eine Typidentifiktation zu erreichen.

Die Schreib-/Lesegeräte 11 sind tragbar batterie- oder akkumulatorbetrieben ausgeführt und besitzen wie erläutert, vorzugsweise ein einfaches numerisches Display zum Klarsichtdarstellen auslesbarer Informationen, so daß ohne aufwendige Datenanalyse bei Kontrollen überprüft werden kann, ob der sich ausweisende Nutzer des Fahrrades tatsächlich berechtigter Besitzer ist bzw. einen gültigen Besitznachweis führt.

Im Transponder können neben transpondertypischen Kennzeichnungen und Informationen sowie den später eingeprägten Benutzerdaten auch Informationen und Daten, die für den eigentlichen Herstellungs- oder Montageprozeß eines Fahrrades bis hin zum Versand erforderlich werden, abgelegt sein. Hierdurch ergeben sich Rationalisierungseffekte und es kann das Qualitätssicherungsregime beim Hersteller bzw. Finalproduzenten verbessert werden.

Die Transponder einschließlich Kunststoffgehäuse und Verguß können bei entsprechend großen Stückzahlen besonders kostengünstig hergestellt und angeboten werden, so daß die zusätzlichen Aufwendungen vertretbar sind. Letztendlich besteht bei Nachweis einer Transponderkennzeichnung die Möglichkeit, versicherungstechnisch Rabatte einzuräumen, so daß auch hierdurch einer weiten Verbreitung und Anwendung des vorgeschlagenen Systems Vorschub geleistet ist.

### Bezugszeichenliste

- 1: Rahmen
- 2: Transponder
- 3: Gehäuse
- 4: Zylindermantel
- 5: Zylinderbohrung
- 6: Zylinderöffnung
- 7: Vorsprünge
- 8: Rücksprünge
- 9: Kappe
- 10: Rand
- 11: Schreib-Lesegerät
- 12: Personalcomputer
- 13: Fax
- 14: Online Verbindung
- 15: Servicecenter
- 16: Postversandweg
- 17: Hotline

## Patentansprüche

1. Verfahren zur fertigungsbegleitenden Dokumentation, und/oder Kennzeichnung sowie zur späteren Identifikation von beweglichen, transportablen Gegenständen oder Gütern mit einem gekapselten elektronischen Speicherbaustein,
**gekennzeichnet durch**,
- in einem frühen Fertigungsstadium nur durch Zerstören lösbares Befestigen eines Transponders, welcher den elektronischen Speicherbaustein enthält, am Gegenstand oder Halbfertigprodukt, wobei der Transponder eine elektronisch auslesbare individuelle Kennzeichnung aufweist;
- kontaktioses Übertragen von fertigungs- und/typrelevanten Identifiktationsdaten und Speichern dieser Daten im Transponder;
- elektronisches Identifizieren des Gegenstandes oder Halbfertigproduktes für weitere Fertigungs- oder Montageschritte, einschließlich Verpackung und Versand;
- Ausliefern des Gegenstandes oder der Güter, wobei zum Lieferzeitpunkt mittels eines kontaktlosen Schreib-Lesegerätes kundenspezifische Daten den Identifikationsdaten zugeordnet und abgespeichert werden, so daß im Falle eines Verlusts oder Diebstahls bei späterem Wiederauffinden die gewünschte Identifikation vorgenommen werden kann.

2. Verfahren nach Anspruch 1,
**dadurch gekennzeichnet**,
daß vor Auslieferung lediglich fertigungstechnologische oder produktionsrelevante Daten im elektronischen Speicher des Transponders gelöscht werden.

3. Verfahren nach Anspruch 1 oder 2,
**dadurch gekennzeichnet**,
daß kundenspezifische und Identifikationsdaten zusätzlich in einer zentralen Datenbank, insbesondere für versicherungstechnische Zwecke, abgelegt sind.

4. Verfahren nach einem der vorangegangenen Ansprüche,
**gekennzeichnet durch**
Anbringen mindestens eines Transponders an oder in Fahrzeugen, insbesondere Fahrrädern.

5. Vorrichtung zur fertigungsbegleitenden Dokumentation und/oder Kennzeichnung sowie zur späteren Identifikation von beweglichen, transportablen Gegenständen oder Gütern mit einem gekapselten elektronischen Speicherbaustein,
**dadurch gekennzeichnet**,
daß der Speicherbaustein Bestandteil eines Transponders ist, welcher in einem allseitig verschließbaren Kunststoffgehäuse angeordnet und wobei das den Transponder aufnehmende Gehäuse kraft-, form- und/oder stoffschlüssig mit dem jeweiligen Gegenstand oder gut verbindbar ist.

6. Vorrichtung nach Anspruch 5,
dadurch gekennzeichnet,
daß das Gehäuse im wesentlichen Hohlzylinderform aufweist, wobei nach Einbringen des Transponders die Zylinderöffnung durch Vergießen oder dergleichen Maßnahmen verschließbar ist.

7. Vorrichtung nach Anspruch 6,
**dadurch gekennzeichnet**,
daß der Zylindermantel mindestens über einen Längsabschnitt einen konischen Verlauf aufweist, um ein Einpressen oder Eindrücken sowie eine Arretierung in eine am Gut vorgesehene Bohrung oder Öffnung zu erreichen.

8. Vorrichtung nach Anspruch 6 oder 7,
**dadurch gekennzeichnet**,
daß die Außenoberfläche des Gehäuses radial umlaufende Arretierungsvor- und/oder rücksprünge aufweist.

9. Vorrichtung nach einem der Ansprüche 6 - 8,
**dadurch gekennzeichnet**,
daß die Zylinderdeckfläche die Form einer randseitig abschließenden oder überstehenden Kappe besitzt.

10. Vorrichtung nach einem der Ansprüche 5 - 9,
**dadurch gekennzeichnet**,
daß nach Verbinden des Gehäuses mit dem oder Anordnen am Gut eine zusätzliche Versiegelung oder Abdeckung in Form einer nur zerstörend entfernbaren Klebefolie aufgebracht ist.

11. Vorrichtung nach einem der Ansprüche 5 - 10,
**dadurch gekennzeichnet**,
daß das Kunststoffgehäuse zur Typen-, Produktionsort- und/oder zeit oder dergleichen Kennzeichnung verschiedenfarbig ist.

12. Vorrichtung nach Anspruch 10,
**dadurch gekennzeichnet**,
daß die Klebefolie zur Typen-, Produktionsort- und/oder -zeit oder dergleichen Kennzeichnung verschiedenfarbig ausgebildet ist.

13. Vorrichtung nach einem der Ansprüche 5 - 12,
**dadurch gekennzeichnet**,
daß das Gehäuse mittels Einspreizverbindung unter Erhalt einer nicht lösbaren plastischen Verformung von mindestens Teilen des Gehäuses in einer Bohrung oder Öffnung eines Rahmenteiles eines Fahrzeuges, insbesondere eines Fahrrades, angeordnet ist.

14. System zur fertigungsbegleitenden Dokumentation, und/oder Kennzeichnung sowie zur späteren Identifikation von beweglichen, transportablen Gegenständen oder Gütern mit einem gekapselten elektronischen Speicherbaustein,
**dadurch gekennzeichnet**,
daß der Speicherbaustein Bestandteil eines in einem Kunststoffgehäuse vorzugsweise vergossenen Transponders zum kontaktlosen Schreiben und Lesen von Daten ist, wobei das Kunststoffgehäuse nicht oder nur zerstörend lösbar an oder in dem Gegenstand oder Gut, insbesondere einem Fahrradrahmen, befestigbar ist; im Speicher des Transponders Daten über Herstellung- und/oder Besitzverhältnisse abgelegt sind;
mittels eines Schreib- und Lesegerätes Speicherdaten autorisiert geschrieben und/oder gelesen werden können, wobei mittels des Lesegerätes beim Auffinden des Gegenstandes oder Gutes Herkunft- und/oder Besitzverhältnisse identifizier- und feststellbar sind.

15. System nach Anspruch 14,
**dadurch gekennzeichnet**,
daß neben einem sichtbar am Gegenstand oder dem Gut befestigten Gehäuse mit Transponder oder Transponderdummy mindestens ein weiterer Transponder an einer schwer erkennbaren, versteckten Stelle angeordnet ist.

16. System nach Anspruch 14 oder 15,
**dadurch gekennzeichnet**,
daß in einer zentralen Datenbank Transponderidentifikatoren, Besitzdaten und/oder Transponderanordnungsdaten gespeichert sind.

17. System nach Anspruch 16,
**dadurch gekennzeichnet**,
daß die Lage des oder der weiteren Transponder aus der Datenbank nach vorheriger Berechtigungsüberprüfung abrufbar sind.

18. System nach Anspruch 15,
**dadurch gekennzeichnet**,
daß das weitere Transpondergehäuse als Bestandteil einer aus konstruktiver oder funktionstechnischer Hinsicht notwendigen Einrichtung für das Gut, insbesondere eines Fahrrades, ist.
